# FASCICULE DE BREVET EUROPEEN

(11) **EP 2 509 871 B1**
(45) Date de publication et mention de la délivrance du brevet: **08.02.2017**
(21) Numéro de dépôt: 10805469.3
(22) Date de dépôt: 09.12.2010
(51) Int. Cl.: B64F 5/00

(54) **PROCÉDÉ DE RÉPARATION D'UN FUSELAGE D'AÉRONEF**
METHODE ZUR REPARATUR EINES FLUGZEUGRUMPFES
AIRFRAME REPAIR METHOD

(30) Priorité: 11.12.2009 FR 0958891
(43) Date de publication de la demande: 17.10.2012
(73) Titulaire: Airbus Operations (S.A.S.), 31060 Toulouse (FR)
(72) Inventeur: ROUX, Jacques, 31770 Colomiers (FR); TARDU, Gilles, 31500 Toulouse (FR)
(74) Mandataire: Gicquel, Olivier Yves Gérard
(86) Numéro de dépôt international: PCT/FR2010/052651
(87) Numéro de publication internationale: WO 2011/077025

(56) Documents cités:
- WO-A1-2007/135318
- US-A- 2 692 425
- HUGHES D: "CANADIANS DEVELOP COMPOSITE TECHNIQUES FOR CF-18 BATTLE DAMAGE REPAIR PROGRAM", AVIATION WEEK AND SPACE TECHNOLOGY, MCGRAW-HILL COMPAGNY, NEW YORK, NY, US, vol. 132, no. 21, 21 mai 1990 (1990-05-21) , XP000147983, ISSN: 0005-2175
- HEXCEL COMPOSITES: "COMPOSITE REPAIR", INTERNET CITATION, 1 avril 1999 (1999-04-01), XP002447898, Extrait de l'Internet: URL:http://www.hexel.com/NR/rdonlyres/6B92 766F-6419-4487-87AA-FE6C607DDE6 E/0/CompositeRepair.pdf [extrait le 2007-08-23]
- "MISLOCATED COREFILL OR HOLES IN HONEYCOMB PANELS", STANDARD REPAIR, XX, XX, 1 décembre 1965 (1965-12-01), pages 1-28, XP000953537,

## Description

L'invention concerne un procédé de réparation des structures primaires d'aéronef. Plus particulièrement l'invention concerne un procédé adapté à la réparation de dommages subis par le revêtement d'un fuselage d'aéronef lequel revêtement est constitué d'un matériau composite à renfort fibreux.

Les structures aéronefs sont fréquemment soumises en service à des impacts avec des oiseaux, des véhicules, des outillages, des installations aéroportuaires etc. De tels impacts créent des zones d'endommagement de moindre résistance mécanique dans la structure, zones qui deviennent des sites privilégiés d'initiation de défauts tels que des criques, susceptibles de se propager.

Plus particulièrement dans le cas d'un fuselage constitué d'un matériau composite à renfort fibreux la zone effectivement endommagée peut être nettement plus étendue que la surface visible de l'impact.

Lorsqu'un aéronef subit un tel dommage il doit impérativement être réparé de sorte à retrouver l'intégrité de la résistance structurale et à éviter toute propagation de défauts à partir de la zone endommagée avant de pourvoir, à nouveau, être remis en service.

De telles réparations doivent pouvoir être effectuées en un temps minimum d'immobilisation de l'appareil.

Un mode de réparation connu consiste à recouvrir la zone endommagée par un doubleur ou « patch » de forme généralement circulaire et de surface nettement plus importante que ladite zone endommagée, puis, à fixer celui-ci par tout moyen approprié tel que des rivets, des boulons, une soudure ou un collage à la partie restée saine de la structure.

Cette solution présente l'avantage d'être relativement simple de mise en oeuvre. Elle présente toutefois l'inconvénient de conserver la zone endommagée, qui, bien que la présence du doubleur permette de limiter les flux d'effort auxquels ladite zone est soumise, reste néanmoins sollicitée et donc susceptible d'initier la propagation de défauts. Par conséquent, de telles réparations ne peuvent être que très provisoires et nécessitent une surveillance très étroite jusqu'à ce qu'une réparation définitive soit effectuée.

Par ailleurs, le doubleur doit être conformé à la forme du fuselage dans la zone considérée. Celle-ci peut être complexe et non développable de sorte qu'elle nécessite une mise en forme spécifique du doubleur, qui, étant de forme circulaire doit être alors découpé dans une tôle de plus grandes dimensions, elle-même formée par tout moyen de chaudronnerie.

Selon un autre mode de réalisation décrit par exemple dans la demande de brevet internationale WO2007135318 au nom de la demanderesse, une découpe polygonale est pratiquée autour de la zone d'impact de sorte à éliminer toute la partie endommagée. Un doubleur, également de forme polygonale mais de surface plus importante est alors fixé à la partie restée saine de sorte à obturer la découpe. Cette méthode permet d'éviter l'initiation de défaut dans la zone endommagée, puisque celle-ci est éliminée. Toutefois, il est alors nécessaire de garantir que l'opération de découpe elle-même n'a pas introduit de défaut. Dans le cas de la demande de brevet WO2007135318, des orifices centrés sur l'intersection des côtés du polygone sont percés en chaque sommet dudit parallélépipède préalablement à la découpe de sorte à faciliter cette dernière et éviter les « traits de scie » malencontreux lors de la découpe délicate au niveau des coins. Le procédé divulgué dans cette demande de brevet vise par conséquent à éviter l'apparition de défauts de découpe susceptibles de donner naissance à des criques aux sommets de la découpe polygonale. C'est en effet dans ces zones que des amorces de criques, consécutives à un manque de minutie de l'opérateur chargé de la découpe, sont les plus susceptibles de se produire.

Dans le cas d'un fuselage constitué d'un matériau composite à renfort fibreux, des défauts tels que des délaminages peuvent être générés lors de la découpe indépendamment du soin apporté par l'opérateur. En effet, l'action de l'outil de coupe, quel qu'il soit, peut facilement rompre la cohésion des plis situés en bord de découpe et ainsi initier des délaminages. En effet, dans le cas où le matériau découpé est un composite à renfort fibreux le risque d'introduction de défauts sur le bord de découpe est essentiellement fonction de la vitesse d'avance de l'outil. À vitesse de coupe donnée, une vitesse d'avance trop élevée favorise l'apparition de délaminages alors qu'une vitesse d'avance trop faible provoque des dégradations thermiques de la matrice (brûlure ou fusion). Ce type d'opération de découpe dans les matériaux composites à renfort fibreux, doit donc être réalisé avec une vitesse d'avance contrôlée dans une plage étroite de vitesses autorisées. Or, dans le cas des opérations de réparation, l'avance de découpe est le plus souvent communiquée manuellement à la machine, par l'action de l'opérateur, qui déplace celle-ci le long du trajet de découpe. Même si la plage de conditions de découpe favorables peut être élargie par un choix judicieux des géométries d'outil, il demeure difficile, voire impossible, d'éviter l'apparition de délaminages des plis de surface, sauf à mettre en oeuvre des procédés sophistiqués à avance automatique permettant un pilotage des paramètres de coupe, notamment la combinaison vitesse de coupe et vitesse d'avance, et ceci selon des trajectoires complexes, correspondant à la forme du fuselage.

Il existe donc un besoin pour un procédé de réparation d'un fuselage d'aéronef en matériau composite pouvant être mis en oeuvre avec suffisamment de sécurité dans des conditions compatibles avec les moyens des ateliers de maintenance d'un aéroport et nécessitant un temps d'immobilisation minimal de l'appareil.

À cette fin, l'invention propose un procédé de réparation d'une zone endommagée du revêtement composite à renfort fibreux d'un fuselage d'aéronef selon la revendication 1.

Cette méthode mise en oeuvre sur un fuselage en matériaux composite présente deux avantages :
- la découpe préalable des orifices circulaires est une opération d'usinage essentiellement axiale qui peut être effectuée par des moyens portatifs autorisant un contrôle précis des conditions de coupe;
- la découpe des côtés du polygone peut être effectuée manuellement avec tout moyen approprié tel que tronçonneuse à disque, scie sauteuse, fraiseuse portative ou défonceuse, donc avec un contrôle moins efficace des conditions de coupe notamment de l'avance, car, de manière surprenante, selon ce mode de réalisation, ces surfaces ne sont pas sollicitées en service une fois le doubleur de revêtement posé.

Ainsi, les découpes aux sommets sont exemptes de défauts par un contrôle rigoureux des conditions de coupe et pour les découpes des côtés, quand bien même présenteraient-elles des défauts, ceux-ci ne sont pas susceptibles de se propager du fait des faibles contraintes auxquelles ces surfaces sont soumises.

Avantageusement les orifices présenteront un diamètre compris entre 20 et 40 mm. Ce diamètre est suffisant, d'une part pour décharger les côtés de la découpe sur une largeur suffisante tout en restant d'autre part compatible avec des moyens de perçage classiques, tels que des forets étagés montés sur une unité de perçage automatique (UPA) ou des systèmes portatifs de perçage orbital, qui permettent de découper de tels orifices en une seule opération, avec un seul outil et évitent ainsi les risques liés à des opérations de reprise.

Selon l'invention, le doubleur n'est pas fixé au fuselage dans les coins. Typiquement lorsque N rangées de fixations doivent être installées, les fixations situées à l'extérieur d'une diagonale nxn ne sont pas installées. Avantageusement n est compris entre 2 et N.

Ce mode de réalisation permet une meilleure distribution de la charge sur l'ensemble des fixations et par conséquent un meilleur drainage des efforts dans la structure restée saine.

Selon un mode de réalisation du procédé objet de l'invention, le doubleur est constitué d'un matériau métallique. Ainsi, il sera plus facile à adapter à la forme du fuselage par des moyens de chaudronnerie classiques. Plus particulièrement, si le fuselage est constitué d'un matériau composite renforcé par des fibres de carbone, le doubleur sera avantageusement constitué d'un alliage de titane pour des raisons de compatibilité galvanique et de proximité des coefficients de dilatation thermique.

Selon un autre mode de réalisation, le doubleur est constitué de plis de fibres pré-imprégnées d'une résine organique, drapés manuellement, mis en forme directement sur le fuselage, préférentiellement sur la zone d'application de la réparation.

Selon ce mode de réalisation, la forme du doubleur s'adapte exactement à la forme de la zone qu'il recouvre lors de l'opération de formage. Avantageusement, lorsque la résine est de type thermodurcissable la cuisson peut être entièrement réalisée sur le fuselage.

L'invention sera maintenant plus précisément décrite dans le cadre de modes de réalisation préférés, nullement limitatifs, représentés sur les figures 1 à 8, dans lesquelles :
- la figure 1 représente un synopsis du principe de réparation objet de l'invention avec figure 1A le perçage des trous d'extrémité, figure 1B la découpe, et figure 1C la pose du doubleur ;
- la figure 2 montre un détail de la figure 1C faisant apparaître la répartition des fixations dans les coins du doubleur ;
- la figure 3 illustre la répartition des fixations dans les coins du doubleur dans un cas général ;
- la figure 4 représente la répartition des contraintes de service dans le fuselage au voisinage d'une réparation selon l'art antérieur ;
- la figure 5 montre la répartition des contraintes de service au voisinage d'une réparation selon un exemple de réalisation de l'invention ;
- la figure 6 est un exemple de réparation dans un cas général nécessitant la découpe d'un raidisseur longitudinal en vue de face ;
- la figure 7 est une vue en coupe B-B selon l'épaisseur de la réparation présentée figure 6 ;
- la figure 8 est une vue en coupe transversale A-A de cette même vue au voisinage immédiat de la réparation.

Toutes ces figures représentent un exemple de réalisation mettant en oeuvre une découpe et un doubleur parallélépipédiques. L'homme du métier adaptera ces enseignements au cas plus général d'une découpe polygonale.

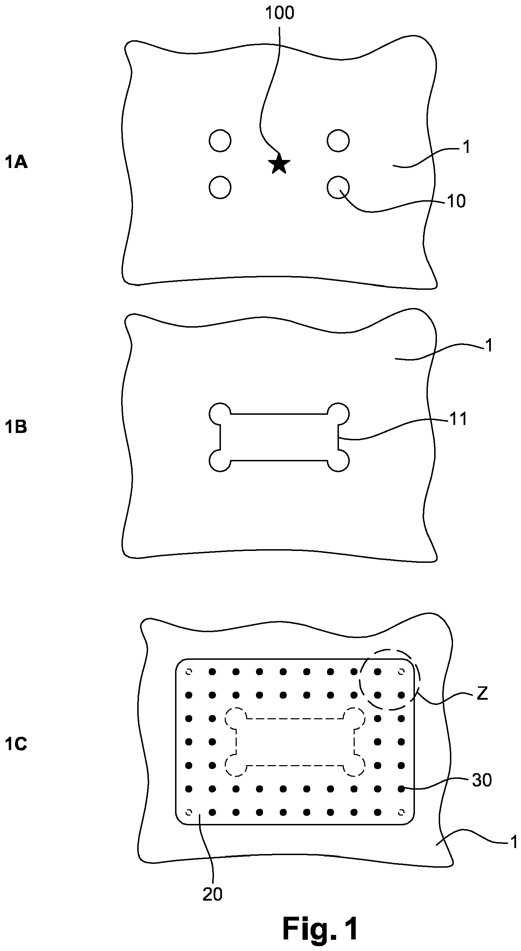

Figure 1A, le revêtement d'un fuselage composite (1) a fait l'objet d'un impact (100). Pour effectuer la réparation, l'opérateur commence par percer quatre trous (10) au moyen d'un dispositif d'usinage axial, lesquels trous délimitent une zone rectangulaire entourant l'impact. Les dimensions de ladite zone rectangulaire sont données par le manuel de maintenance de l'appareil en fonction des caractéristiques du revêtement et des caractéristiques de l'impact.

Figure 1B en partant de ces alésages, l'opérateur réalise les traits de découpe (11) permettant d'extraire du revêtement la zone rectangulaire préconisée. Cette découpe est réalisée par un outil à avance radiale, auquel le mouvement d'avance est communiqué manuellement par l'opérateur. À titre d'exemple, pour un revêtement composite à renfort fibreux, cet outillage peut être constitué par une tronçonneuse, une scie sauteuse ou une défonceuse telle qu'une fraiseuse portative disponible commercialement sous la marque ONSRUD®.

Un doubleur (20) est alors appliqué de sorte à refermer la découpe, celui-ci est fixé à la partie restée saine du fuselage par N rangées de fixations (30), ici, 2.

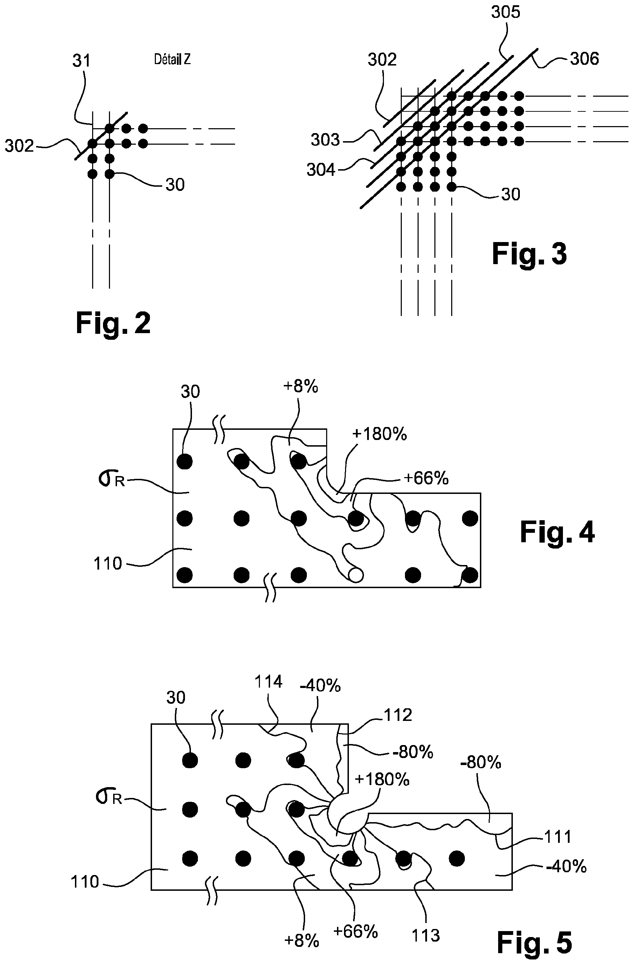

Figure 2, N=2 et afin de mieux répartir le drainage des efforts dans la partie saine, la fixation prévue à l'emplacement (31) situé à l'extérieur de la diagonale 2x2 (302) n'est pas installée dans le coin du doubleur. D'une manière générale, figure 3, les fixations situées dans la partie extérieure du coin du doubleur ne sont pas installées sur une ou plusieurs rangées. Dans l'exemple de la figure 3, N=4, les fixations ne sont pas installées aux emplacements situés au-delà de la diagonale 4x4 (304) soit 6 fixations non installées. Le nombre de fixations non installées dans le coin est fonction du nombre de rangées et de l'intensité du chargement, c'est-à-dire de la surface de zone endommagée et de sa localisation sur le fuselage. Cette configuration est déterminée par calcul et renseignée dans le manuel de maintenance et réparation pour les cas les plus fréquents.

Figure 4 et figure 5 la comparaison du chargement en service du bord de la découpe peut être effectuée au moyen d'une simulation par éléments finis. Les deux figures correspondent aux mêmes conditions de chargement macroscopiques et donne les contraintes de Von Misés dans le fuselage réparé au voisinage de la découpe. La sollicitation de référence, correspondant à la contrainte dans les zones éloignées de la découpe (110) est la même dans les deux cas. Le niveau de sollicitation des autres zones est défini de manière relative par rapport à cette sollicitation de référence.

Figure 4, en utilisant le principe de découpe de l'art antérieur avec des congés de raccordement au niveau des bords de la découpe, la sollicitation des parties droites de la découpe est comprise entre 60 % et 100 % de la sollicitation de référence.

Figure 5, en utilisant le principe de découpe selon l'invention, la sollicitation en service des bords droits de la découpe est réduite de 80 % par rapport à la sollicitation de référence au voisinage immédiat de ce bord et reste encore réduite de 40 % lorsque l'on s'éloigne substantiellement du bord, l'isodyne (111, 112) délimitant cette réduction de 40 % de la sollicitation de référence s'étendant au-delà même de la première rangée de fixations.

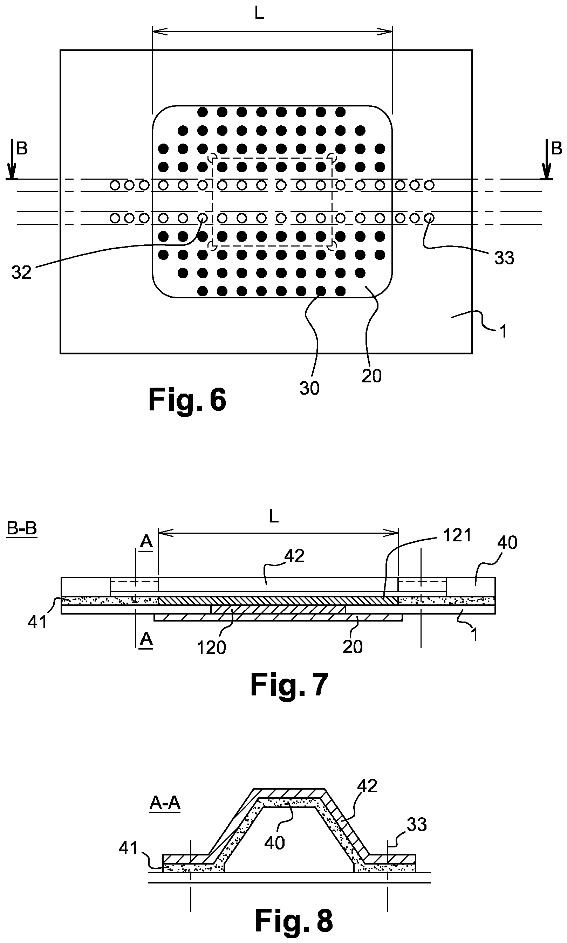

La figure 6 représente le cas général d'une réparation de fuselage, notamment lorsque la zone à découper passe au travers d'un raidisseur longitudinal ou lisse (40). Dans le cas d'un fuselage composite, de tels raidisseurs sont liés à la peau par collage, cocuisson ou d'autres techniques d'assemblage sans fixation. Dans ce cas la lisse est découpée sur une largeur L supérieur à la largeur de découpe. La largeur L est égale à la largeur du doubleur (20) et sera donc fonction du nombre de rangées de fixations nécessaires pour fixer celui-ci à la partie saine du fuselage et à transmettre les flux d'effort.

Figure 7, une cale (120) d'épaisseur égale à l'épaisseur de peau est placée dans la découpe. Un doubleur intérieur (121) d'épaisseur apte à compenser l'épaisseur de la semelle de lisse (41) et de dimensions sensiblement égales à celle du doubleur extérieur (20) est placé à l'intérieur du fuselage. La continuité mécanique du raidisseur (40) est assurée par la pose d'une éclisse (42).

Des fixations (30) sont placées selon un nombre de rangées approprié, traversant et assemblant le doubleur extérieur (20), la peau du fuselage restée saine (1) et le doubleur intérieur (121). Dans la zone de découpe, lesdites fixations traversent et assemblent, le doubleur extérieur, la cale (120) et le doubleur intérieur.

Dans la zone de passage de la lisse (40), au niveau de la découpe, des fixations (32) traversent et assemblent le doubleur extérieur, la cale (120), le doubleur intérieur (121) et la semelle de l'éclisse de lisse (42).

En dehors de la zone de découpe, le même type de fixation (32) assemble et traverse le doubleur extérieur, la peau du fuselage, le doubleur intérieur et le pied de l'éclisse de lisse.

Finalement, figure 8, au-delà du doubleur extérieur, un troisième type de fixation (33) assemble et traverse, la peau extérieure, la semelle (41) de la lisse d'origine, et la semelle de l'éclisse de lisse.

Avantageusement, l'éclisse de lisse (41) est constituée d'un matériau métallique, préférentiellement d'un alliage de titane d'une épaisseur de l'ordre de 1 mm.

Les fixations peuvent être de type rivet mais sont préférentiellement de type boulonné telles que les fixations Hi-Lite ® distribuées par la société du même nom, ce qui permet un assemblage facile à installer et à démonter pour l'exécution d'une réparation définitive.

La description ci-avant illustre clairement que par ses différentes caractéristiques et leurs avantages, la présente invention atteint les objectifs qu'elle s'était fixés. En particulier, le profil de la découpe étant adapté pour réduire fortement contraintes sur les bords de la découpe, le procédé de réparation d'un fuselage d'aéronef en matériau composite selon l'invention, peut être mis en oeuvre avec suffisamment de sécurité dans des conditions compatibles avec les moyens des ateliers de maintenance d'un aéroport et nécessitant un temps d'immobilisation minimal de l'appareil.

## Revendications

1. Procédé de réparation d'une zone endommagée du revêtement d'un fuselage composite (1) à renfort fibreux, comprenant les étapes consistant à :
- réaliser une découpe (11) rectangulaire autour de la zone endommagée ;
- percer un orifice circulaire (1 0) sensiblement centré sur l'intersection des côtés du contour rectangulaire de la découpe (11) dans le fuselage en chacun des sommets dudit contour préalablement à ladite opération de découpe ;
- poser un doubleur (20) de revêtement de forme rectangulaire, de surface supérieure à la surface découpée et adapté à la forme du fuselage de sorte à obturer la découpe (11) ;
- fixer ledit doubleur au revêtement du fuselage resté sain par au moins deux rangées de fixations (30) de type rivet ou de type boulonné, disposées parallèlement au périmètre du doubleur ;
**caractérisé en ce qu'**en chaque sommet du doubleur les fixations (31) situées à l'extérieur d'une diagonale (302,305) ne sont pas installées.

2. Procédé selon la revendication 1, **caractérisé en ce que** le diamètre de l'orifice circulaire (1 0) préalablement découpé est compris entre 20 et 40 mm.

3. Procédé selon les revendications 1 à 2, **caractérisé en ce que** chaque orifice circulaire (10) est découpé en une seule opération et par un seul outil.

4. Procédé selon l'une quelconque des revendications 1 à 3, **caractérisé en ce que** le doubleur (20) est constitué d'un alliage métallique.

5. Procédé selon l'une quelconque des revendications 1 à 4, **caractérisée en ce que** le doubleur (11) est constitué d'un empilement de plis pré-imprégnés mis en forme à chaud sur le fuselage (1) de l'aéronef.

6. Aéronef comprenant une réparation réalisée selon l'une quelconque des revendications précédentes.

## Patentansprüche

1. Verfahren zum Reparieren eines beschädigten Bereichs der Haut eines faserverstärkten Verbundwerkstoffrumpfs (1), umfassend die folgenden Schritte:
- Ausführen eines rechteckigen Ausschnitts (11) um den beschädigten Bereich herum,
- vor dem Ausschneidevorgang Bohren einer kreisförmigen Öffnung (10), die im Wesentlichen auf den Schnittpunkt der Seiten der rechteckigen Kontur des Ausschnitts (11) zentriert ist, an jedem der Scheitelpunkte der Kontur in den Rumpf,
- Anordnen eines rechteckigen Haut-Patch (20) mit einer größeren Fläche als die ausgeschnittene Fläche, das an die Form des Rumpfs angepasst ist, um den Ausschnitt (11) zu verdecken,
- Befestigen des Patch an der unbeschädigten Haut des Rumpfs durch mindestens zwei Reihen von niet- oder bolzenartigen Befestigungsvorrichtungen (30), die parallel zum Umfang des Patch angeordnet sind, **dadurch gekennzeichnet, dass** die an jedem Scheitelpunkt des Patch außerhalb einer Diagonalen (302, 305) angeordneten Befestigungsvorrichtungen (31) nicht installiert werden.

2. Verfahren nach Anspruch 1, **dadurch gekennzeichnet, dass** der Durchmesser der vorher ausgeschnittenen kreisförmigen Öffnung (10) zwischen 20 und 40 mm beträgt.

3. Verfahren nach den Ansprüchen 1 bis 2, **dadurch gekennzeichnet, dass** jede kreisförmige Öffnung (10) in einem einzigen Vorgang und durch ein einziges Werkzeug ausgeschnitten wird.

4. Verfahren nach einem der Ansprüche 1 bis 3, **dadurch gekennzeichnet, dass** das Patch (20) aus einer Metalllegierung besteht.

5. Verfahren nach einem der Ansprüche 1 bis 4, **dadurch gekennzeichnet, dass** das Patch (11) aus einer heißgeformten Stapelung von vorimprägnierten Falten auf dem Rumpf (1) des Fluggeräts besteht.

6. Fluggerät, umfassend eine nach einem der vorhergehenden Ansprüche durchgeführte Reparatur.

## Claims

1. Method for repairing a damaged zone of the skin of a fibre-reinforced composite fuselage (1), comprising the steps consisting in:
- making a rectangular cutout (11) around the damaged zone;
- drilling a circular orifice (10) centred substantially on the intersection of the sides of the rectangular contour of the cutout (11) in the fuselage at each of the vertices of the said contour prior to the said cutting-out operation;
- placing a skin patch (20) of rectangular shape, with a surface area greater than the cut-out surface area and tailored to the shape of the fuselage so as to blank off the cutout (11);
- affixing the said patch to the still-sound fuselage skin using at least two rows of rivet-type or bolted-type fixings (30) arranged parallel to the perimeter of the patch;
**characterized in that**, at each vertex of the patch, the fixings (31) situated on the outside of a diagonal (302, 305) are not fitted.

2. Method according to Claim 1, **characterized in that** the diameter of the circular orifice (10) cut out beforehand is comprised between 20 and 40 mm.

3. Method according to Claims 1 to 2, **characterized in that** each circular orifice (10) is cut out in a single operation and using a single tool.

4. Method according to any one of Claims 1 to 3, **characterized in that** the patch (20) is made of a metal alloy.

5. Method according to any one of Claims 1 to 4, **characterized in that** the patch (11) is made up of a stack of preimpregnated plies shaped in the hot state on the aircraft fuselage (1).

6. Aircraft comprising a repair performed according to any one of the preceding claims.
